# EUROPEAN PATENT APPLICATION

(11) **EP 4 691 283 A1**
(43) Date of publication of application: **11.02.2026**
(21) Application number: 23933587.0
(22) Date of filing: 31.05.2023
(51) Int. Cl.: A24F 40/40, A24F 40/10, A24F 40/42, A24F 40/70

(54) **POROUS CARBON CORE AND PREPARATION METHOD THEREFOR, ATOMIZATION CORE AND ELECTRONIC ATOMIZER**

(30) Priority: 21.04.2023 CN 202310439169
(71) Applicant: SONGHU SHENJIAN TECHNOLOGY (DONGGUAN) CO., LTD., Dongguan, Guangdong 523781 (CN); Songshan Lake Materials Laboratory, Dongguan, Guangdong 523000 (CN)
(72) Inventor: YU, Jie, Dongguan, Guangdong 523000 (CN); LIN, Zijia, Dongguan, Guangdong 523000 (CN); JIANG, Tao, Dongguan, Guangdong 523000 (CN); CHEN, Jingyu, Dongguan, Guangdong 523000 (CN); HUANG, Ximei, Dongguan, Guangdong 523000 (CN); YUAN, Fu, Dongguan, Guangdong 523000 (CN); LI, Zhenwei, Dongguan, Guangdong 523000 (CN)
(74) Representative: Meroni, Francesca
(86) International application number: PCT/CN2023/097514
(87) International publication number: WO 2024/216713

(57) **Abstract**

A porous carbon core and a preparation method therefor, an atomization core (11), and an electronic atomizer (10). The method comprises: obtaining a porous carbon preform, the porous carbon preform comprising a porous carbon matrix (111) and a part to be treated which are integrally formed; and treating said part in a laser processing mode, so that said part is graphitized to form a high conductive heating area (112), and a porous carbon core is obtained, wherein the conductivity of the high conductive heating region (112) is greater than that of the porous carbon matrix (111). A part to be treated of a porous carbon preform is treated by adopting a laser processing method, so that said part absorbs laser energy, local instantaneous high temperature is generated, and local graphitization occurs, and thus a high conductive heating area (112) is formed in the porous carbon preform and can be used as an atomization part; electric heating can be basically carried out on the atomization part of high conductivity, the porous carbon matrix (111) of low conductive is used as a non-atomization part and mainly used for absorbing and guiding e-liquid, thereby reducing the energy consumption of the porous carbon atomization core (11).

## Description

### CROSS REFERENCE TO RELATED APPLICATION

The present disclosure claims the priority to the Chinese patent application with the filing No. 202310439169.6 filed with a Chinese Patent Office on April 21, 2023, and entitled "POROUS CARBON CORE AND PREPARATION METHOD THEREFOR, ATOMIZATION CORE AND ELECTRONIC ATOMIZER", which is incorporated herein by reference in entirety.

### TECHNICAL FIELD

The present disclosure relates to a technical field of materials of atomization device. Specifically, the present disclosure relates to a porous carbon core and preparation method thereof, an atomization core, and an electronic atomizer.

### BACKGROUND

The most common atomization cores at present are ceramic cores and cotton cores, which are generally composed of metal heating bodies, oil-absorbing ceramics, and oil-absorbing cotton. Due to a distinct interface between the metal heating bodies and the oil-absorption component, phenomena such as "explosion of liquid" and "cracking of liquid" are prone to occur during a heating and atomization process. Moreover, there is an uniform temperature field distribution at the interface, which can easily lead to the problems of local overheating or even "clogging pores".

As a critical core component of the electronic atomizer, atomization cores have been widely used. A porous carbon atomization core as a new type of atomization core is a carbon material with integrated heating parts and liquid absorbing parts, without an interface, and a temperature field distribution is uniform, which can well solve the problems existing in ceramic cores and cotton cores, has better atomization performance, and simplifies a production process and reduces costs.

However, the relatively large heating area of the porous carbon atomization core results in higher power consumption during heating and atomization. There is a phenomenon that heat is generated in the non-atomization area and heat diffuses from the atomization area to the non-atomization area, causing a certain amount of energy waste, thus causing the energy consumption of the porous carbon electronic atomizer to be relatively high.

### SUMMARY

The objective of this disclosure lies in providing a porous carbon core and preparation method thereof, an atomization core, and an electronic atomizer, so as to at least improve the problem of high energy consumption of the porous carbon electronic atomizer.

In the first aspect, an embodiment of the present disclosure provides a method for adjusting and controlling a porous carbon heating area, wherein the method can include:
obtaining a porous carbon preform, wherein the porous carbon preform can include a porous carbon matrix and a part to be treated which are integrally formed; and
treating the part to be treated by laser processing to graphitize the part to be treated to form a high conductive heating area, thereby obtaining the porous carbon core;
wherein an electrical conductivity of the high conductive heating area is greater than that of the porous carbon matrix.

In the above implementation process, treating the part to be treated of the porous carbon preform by the laser processing, so that the part to be treated absorbs the laser energy, generates local instantaneous high temperature, and undergoes local graphitization, thereby forming the high conductive heating area in the porous carbon preform. Due to the characteristics of monochromaticity and high directivity and concentrated energy of the laser, laser can be used for precise processing of porous carbon materials. At the same time, since the absorption rate of porous carbon materials to infrared lasers can reach more than 90%, the absorbed laser energy is mainly converted into internal energy. Therefore, using laser processing can achieve an effect of reaching an instantaneous high temperature in a processed area of the porous carbon preform while keeping the temperature in a non-processed area basically unchanged, so that the processed area of the porous carbon preform undergoes instant graphitization, forming a high electrical conductivity area, while the non-processed area maintains low electrical conductivity characteristics. At the same time, laser processing only changes the distribution of resistance in the porous carbon preform, while maintaining the integration of the liquid absorbing part and the heating and atomization part, and maintaining the porous structure of the heating and atomization area. Therefore, it can ensure the patency of the liquid absorbing and guiding channels and the uniform distribution of the heating temperature field. Additionally, since the porous carbon absorbs the high temperature generated by the laser, the porous carbon is liquefied and gasified in small amounts, which causes the processed area to form a groove in a direction towards an interior of the porous carbon preform, and at the same time, this groove does not run through the entire porous carbon core. The setting of controlling the groove not to run through the entire porous carbon core can reduce the direct contact between the heating and atomization area and the atomization substance in the liquid storage chamber, reduce heat loss, and also reduce the possibility of the atomization substance deteriorating due to heating.

As an optional embodiment, a difference between an electrical conductivity of the porous carbon matrix and an electrical conductivity of the high conductive heating area can be no less than 400 S/m.

During the above implementation process, by controlling the electrical conductivity of the high conductive heating area and the electrical conductivity of the porous carbon matrix to maintain a difference, when the porous carbon core is applied as the atomization core, during normal operation, the power supply is mainly used for the part of the high conductive heating area to form an atomization area, and the remaining porous carbon matrix acts as the non-heating area and basically does not occupy the power supply, thereby improving an energy utilization efficiency of heating and atomization and reducing the energy consumption of the atomization core.

As an optional embodiment, the electrical conductivity of the porous carbon matrix can be less than 100 S/m and the electrical conductivity of the high conductive heating area can be greater than 500 S/m.

Controlling the electrical conductivity of a porous carbon plate to be less than a specific value and the electrical conductivity of the heating area to be higher than a specific value can achieve better energy efficiency distribution, and the energy consumption of the atomization core can be further reduced.

As an optional embodiment, a heat conductivity of the porous carbon preform can be less than 2 W/(m·K).

Controlling the heat conductivity of the porous carbon matrix to be less than a specific value can reduce the diffusion of heat during the heating and atomization process to the non-heating area and the liquid, and also play a function of improving the energy utilization efficiency of heating and atomization.

As an optional embodiment, an absorption rate of the porous carbon to the laser can be greater than 80%.

Controlling the absorption rate of the porous carbon perform to the laser to be greater than 80% can enable the porous carbon to absorb sufficient laser energy, thereby generating a local instantaneous high temperature, and achieving the purpose of adjusting and controlling the resistance of the heating area of the porous carbon. In actual production, production efficiency and energy efficiency can also be improved, waste is reduced and costs are saved.

As an optional embodiment, a laser power of the laser processing can be 10-100 W, and a processing speed of the laser processing is 1-1000 mm/s.

Using an appropriate laser power and processing speed can enable the porous carbon to absorb sufficient laser energy, thereby generating a local instantaneous high temperature, achieving the purpose of adjusting and controlling the resistance of the porous carbon heating area, avoiding the occurrence of excessive absorption energy that damages the structure of the porous carbon and reduce the mechanical strength of the porous carbon.

As an optional embodiment, the obtaining a porous carbon preform can include: mixing resin and pore-forming agent, then performing curing, pore forming and carbonizing to obtain the porous carbon preform.

As an optional embodiment, a porosity of the porous carbon preform can be 40% to 80%, a residual carbon rate of the resin is greater than 40%, and a mass ratio of the resin to the pore-forming agent is 35:65 to 85:15.

Controlling the porosity of the porous carbon matrix to be 40%-80% enables the porous carbon matrix to have good liquid absorbing and liquid guiding performance, while having a high mechanical strength. Using resins with the residual carbon rate of no less than 40% can enable the obtained porous carbon material to better maintain a skeleton structure of the matrix resin, enhance the mechanical strength of the porous carbon material, while reduce the possibility of generating large pores. Controlling the mass ratio of resin to pore-forming agent to be 35:65 to 85:15 can enable the porous carbon preform to obtain a higher through-hole rate, thereby enabling the porous carbon preform to have better liquid absorbing and liquid guiding performance, and having a higher mechanical strength.

As an optional embodiment, the resin can include at least one of epoxy resin, phenolic resin, urea-formaldehyde resin, polyimide resin, benzodiazepine resin and polyarylacetylene resin; and the pore-forming agent includes at least one of sodium chloride, starch, polyvinyl alcohol, polyvinyl butyral, polyvinylpyrrolidone and paraffin.

As an optional embodiment, a curing temperature can be 80°C to 150°C and a carbonization temperature can be 550°C to 750°C.

Selecting an appropriate curing temperature can enable the resin with a residual carbon rate of not less than 40% to undergo a curing reaction at an appropriate speed, reducing the possibility of bubble generation and the possibility of decomposition reaction, so that the skeleton of the resin matrix has a mechanical strength. Selecting an appropriate carbonization temperature can enable the porous carbon preform to be fully carbonized, while a range of specified requirements for electrical conductivity and heat conductivity can be reached, thereby reducing the occurrence of heat generation in non-atomization areas and heat diffusion from the atomization area to the non-atomization area, and improving energy utilization efficiency.

In the second aspect, an embodiment of the present disclosure provides a porous carbon core, wherein the porous carbon core can include a porous carbon matrix and a high conductive heating area which are integrally formed; and the electrical conductivity of the high conductive heating area can be greater than that of the porous carbon matrix.

During the above implementation process, the porous carbon core with an integrally formed porous carbon matrix and a high conductive heating area distributes the resistance and realizes the heating of part areas. When it is applied as an atomization core, the high conductive heating area can act as the atomization part, allowing the electrical heating to basically occur in this atomization part with high electrical conductivity. The porous carbon matrix with low electrical conductivity is a non-atomization part, which mainly serves for absorbing and guiding liquid, significantly improving the utilization efficiency of energy and enhancing the atomization performance, while reducing the energy consumption of the porous carbon atomization core.

As an optional embodiment, the porous carbon matrix can be provided with a groove, and the high conductive heating area can be located within the groove.

During the above implementation process, the groove does not run through the entire porous carbon core. The setting of controlling the groove not to run through the entire porous carbon core can reduce the direct contact of the high conductive heating area with the atomization substance in the liquid storage chamber, reduce heat loss and also reduce the possibility of the atomization substance deteriorating due to heating.

As an optional embodiment, a depth-to-width ratio of the grooves can be less than 10.

Controlling the depth-to-width ratio of the groove is conducive to a rapid release of the aerosol after atomization, generating a high atomization volume, and it can also reduce the possibility of forming an overly thick liquid film above the heating and atomization area with the high electrical conductivity, significantly reducing the problems such as "explosion of liquid" and "cracking of liquid".

As an optional embodiment, the high conductive heating area can be located in a non-edge part of the porous carbon matrix.

During the above implementation process, locating the high conductive heating area in the non-edge part of the porous carbon matrix can reduce the diffusion of heat during the heating and atomization process to the edge of the porous carbon, reducing energy loss and waste, and also reducing the possibility of the porous carbon atomization core heating the housing and sealing gasket of the electronic atomizer to cause aging.

In the third aspect, an embodiment of the present disclosure provides an atomization core, wherein the atomization core can include the porous carbon core prepared by the method for preparing the porous carbon core provided in the first aspect or the porous carbon core provided in the second aspect.

As an optional embodiment, the atomization core can further include an electrode, and the electrode is directly electrically connected to the high conductive heating area.

In the fourth aspect, an embodiment of the present disclosure provides an electronic atomizer, wherein the electronic atomizer can include the atomization core provided in the third aspect.

As an optional embodiment, the atomization core can be provided with a liquid absorbing surface and an atomization surface, the liquid absorbing surface faces a liquid guiding channel of the electronic atomizer, the atomization surface and the liquid absorbing surface are arranged opposite to each other, and the atomization surface is provided with the high conductive heating area.

### BRIEF DESCRIPTION OF DRAWINGS

In order to more clearly illustrate technical solutions of embodiments of the present disclosure, drawings that need to be used in the embodiments of the present disclosure will be briefly introduced below. It should be understood that the drawings only show some embodiments of the present disclosure, and thus should not be regarded as limitation to the scope. For those ordinarily skilled in the art, other related drawings can be obtained based on these drawings without creative work.
FIG. 1 is a low-magnification scanning electron microscope photo of a porous carbon preform prepared in the embodiment 1 of the present disclosure;
FIG. 2 is a high-magnification scanning electron microscope photo of the porous carbon preform prepared in the embodiment 1 of the present disclosure;
FIG. 3 is X-ray diffraction spectrum of the porous carbon preform prepared in an embodiment 1 of the present disclosure;
FIG. 4 is a Raman spectrum of the porous carbon preform prepared in the embodiment 1 of the present disclosure;
FIG. 5 is a schematic diagram of a shape of a laser processing area in the embodiment 1 of the present disclosure;
FIG. 6 is a scanning electron microscope photo of an atomization surface prepared in the embodiment 1 of the present disclosure;
FIG. 7 is a scanning electron microscope photo of a processed area after laser processing in the embodiment 1 of the present disclosure;
FIG. 8 is an optical microscope photo of a transverse section of an atomization core prepared in the embodiment 1 of the present disclosure;
FIG. 9 is X-ray diffraction spectrum of a material in a processed area after laser processing in the embodiment 1 of the present disclosure;
FIG. 10 is a Raman spectrum of the material in the processed area after laser processing in the embodiment 1 of the present disclosure;
FIG. 11 is a structural schematic diagram of the atomization core prepared in the embodiment 1 of the present disclosure;
FIG. 12 is a schematic diagram of a transverse section of the atomization core prepared in the embodiment 1 of the present disclosure;
FIG. 13 is a schematic diagram of a vertical section of the atomization core prepared in the embodiment 1 of the present disclosure;
FIG. 14 is a structural schematic diagram of the electronic atomizer prepared in the embodiment 1 of the present disclosure;
FIG. 15 is a schematic diagram of a shape of a laser processing area in an embodiment 2 of the present disclosure;
FIG. 16 is a structural schematic diagram of an atomization core prepared in the embodiment 2 of the present disclosure;
FIG. 17 is a schematic diagram of a shape of a laser processing area in an embodiment 3 of the present disclosure;
FIG. 18 is a schematic diagram of an atomization core prepared in the embodiment 3 of the present disclosure;
FIG. 19 is a schematic diagram of a shape of a laser processing area in an embodiment 4 of the present disclosure;
FIG. 20 is a structural schematic diagram of an atomization core prepared in the embodiment 4 of the present disclosure; and
FIG. 21 is a flowchart of a method provided by the present disclosure.

Reference signs: 10 - electronic atomizer; 11 - atomization core; 12 - sealing gasket; 13 - pin guide column; 14 - atomization substance; 15 - liquid storage chamber; 16 - liquid guiding channel; 17 - airflow channel; 18 - housing; 111 - porous carbon matrix; 112 - high conductive heating area; 113 - electrode; 1120 - laser processing area, 1111 - liquid absorbing surface, 1112 - atomization surface.

### DETAILED DESCRIPTION OF EMBODIMENTS

The embodiments of the present disclosure will be described in detail below in combination with the embodiments. However, it should be understood by those skilled in the art that the following embodiments are only for illustrating the present disclosure and should not be regarded as limiting a scope of the present disclosure. If no specific conditions are specified in the embodiments, they are carried out under conventional conditions or as recommended by the manufacturers. If production manufacturers of reagents or instruments used are not specified, they are all common products that can be purchased from the market.

It should be noted that in the present disclosure, "and/or" such as "feature 1 and/or feature 2" means that it can be the three situations, namely, "feature 1" alone, "feature 2" alone, or "feature 1" combined with "feature 2".

In addition, in the description of the present disclosure, unless otherwise specified, a meaning of "more" in "one or more" refers to two or more; a range of "numerical a~numerical b" includes both end values "a" and "b", and a "unit" in "numerical a~numerical b + a unit of measurement" represents the "unit of measurement" of both the "numerical a" and the "numerical b".

A porous carbon atomization core as a new type of atomization core is a carbon material with integrated heating parts and liquid absorbing parts, without an interface, and a temperature field distribution is uniform, which can well solve the problems existing in ceramic cores and cotton cores, has better atomization performance, and simplifies a production process and reduces costs.

However, the heating area of the porous carbon atomization core is large, resulting in a relatively large power consumption for heating and atomization, and there is a phenomenon of heat generation in non-atomization areas and heat diffusion from atomization areas to the non-atomization areas, causing energy waste, thus resulting in higher energy consumption of the porous carbon electronic atomizer.

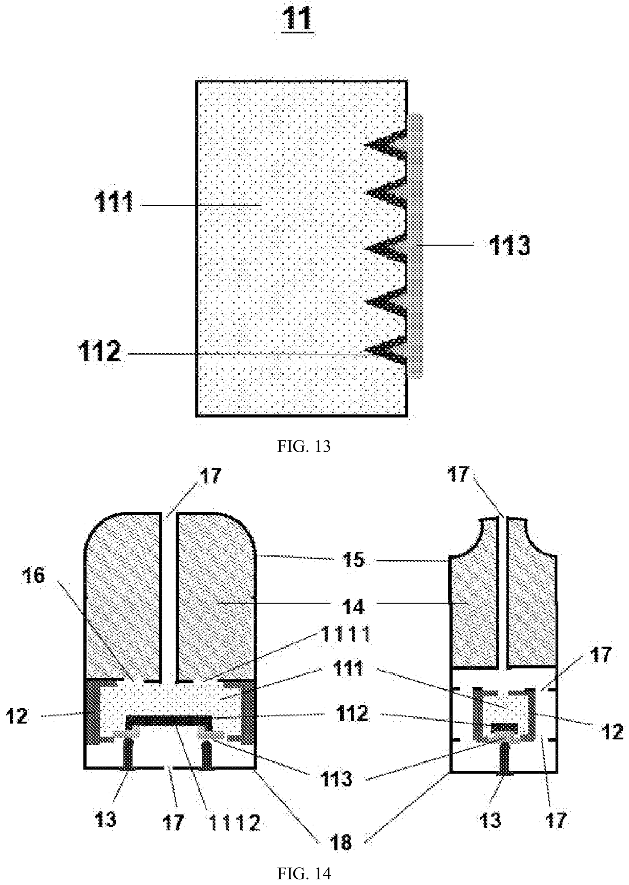

The inventors intended to improve the problem of high energy consumption of the porous carbon electronic atomizer 10, and proposed an electronic atomizer 10, as shown in FIG. 14. The atomizer includes an atomization core 11, a sealing gasket 12, a pin guide column 13, an airflow channel 17, atomization substance 14, a liquid storage chamber 15, a liquid guiding channel 16 and a housing 18. The atomization core 11 includes a porous carbon core and an electrode 113. The electrode 113 forms an electrical connection with the pin guide column 13. The pin guide column 13 is used to form an electrical connection with an external power source. A surface of the atomization core 11 containing the electrode 113 is placed downward as an atomization surface 1112 and is communicated with the airflow channel 17, and a surface opposite to the surface of the atomization core 11 containing the electrode 113 faces upward as a liquid absorbing surface 1111 and is communicated with the liquid guiding channel 16. The four side surfaces of the atomization core 11 except the atomization surface 1112 and the liquid absorbing surface 1111 are surrounded by the sealing gasket 12 and fixed in the housing 18, serving as a leak-proof function. The liquid guiding channel 16 is communicated with the liquid storage chamber 15. The atomization substance 14 is filled in the liquid guiding channel 16 and the liquid storage chamber 15. The porous carbon core includes a porous carbon matrix 111 and a high conductive heating area 112. The electrical conductivity of the high conductive heating area 112 is greater than that of the porous carbon matrix 111. The electrode 113 and the high conductive heating area 112 form an electrical connection.

By forming the high conductive heating area 112 on the porous carbon matrix 111 and controlling it within an appropriate area range, the power consumption for the atomization core 11 during normal operation is greatly reduced, and the diffusion of heat to the atomization substance 14 during heating and atomization is significantly reduced, improving energy utilization efficiency, reducing the energy consumption of the carbon atomization core 11, and increasing a battery life of the electronic atomizer 10, and at the same time, an integration of the liquid absorbing part and the heating part in the atomization core 11 can further be maintained, and the porous structure of the heating area can be maintained, thereby ensuring an uniform distribution of the temperature field, ensuring a patency of the liquid guiding channel 16, reducing an occurrence of the problems such as "explosion liquid" and "clogging pores", and making a comprehensive performance of the porous carbon atomization core 11 more superior.

In some embodiments, a shape of the atomization core 11 is a cylinder or a polyhedron. It can meet the requirements of different electronic atomizers 10 for the shape of the atomization core 11, and can ensure that the manufacturing process is simple and the production efficiency is high.

The present disclosure embodiment provides a porous carbon core. The porous carbon core includes a porous carbon matrix 111 and a high conductive heating area 112 which are integrally formed. The electrical conductivity of the high conductive heating area 112 is greater than that of the porous carbon matrix 111.

By forming the high conductive heating area 112 with high electrical conductivity on the porous carbon matrix 111, the adjustment of the resistance distribution of the entire porous carbon core is achieved. When it is applied as an atomization core 11, the high conductive heating area 112 can act as the atomization part, allowing the electrical heating to basically occur in this atomization part with high electrical conductivity. The porous carbon matrix 111 with low electrical conductivity is a non-atomization part, which mainly serves for absorbing and guiding liquid, significantly improving the utilization efficiency of energy and enhancing the atomization performance, while reducing the energy consumption of the porous carbon atomization core 11.

In some embodiments, the difference in electrical conductivity between the high conductive heating area 112 and the porous carbon matrix 111 is not less than 400 S/m. By controlling the electrical conductivity of the high conductive heating area 112 and the electrical conductivity of the porous carbon matrix 111 to maintain a difference, when the porous carbon core is applied as the atomization core 11, during normal operation, the power supply is mainly used for the part of the high conductive heating area 112 to form the heating area, and the remaining porous carbon matrix 111 acts as the non-heating area and basically does not occupy the power supply, thereby improving the energy utilization efficiency of heating and atomization and reducing the energy consumption of the atomization core 11. Optionally, the electrical conductivity of the porous carbon matrix 111 is less than 100 S/m, and the electrical conductivity of the high conductive heating area 112 is greater than 500 S/m. Controlling the electrical conductivity of a porous carbon plate to be less than a specific value and the electrical conductivity of the heating area to be higher than a specific value can achieve better energy efficiency distribution, and the energy consumption of the atomization core 11 can be further reduced.

In some embodiments, the porous carbon matrix 111 is provided with a groove, and the high conductive heating area 112 is provided in the groove. The groove does not run through the entire porous carbon core. The setting of controlling the groove not to run through the entire porous carbon core can reduce the direct contact of the high conductive heating area 112 with the atomization substance 14 in the liquid storage chamber 15, reduce heat loss and also reduce the possibility of the atomization substance 14 deteriorating due to heating. Optionally, a depth-to-width ratio of the groove is less than 10. Controlling the depth-to-width ratio of the groove is conducive to a rapid release of the aerosol after atomization, ensuring a high atomization volume, and it can also reduce the possibility of forming an overly thick liquid film above the heating and atomization area with the high electrical conductivity, significantly reducing the problems such as "explosion of liquid" and "cracking of liquid".

In some embodiments, a heat conductivity of the porous carbon matrix 111 is less than 2 W/(m·K). Controlling the heat conductivity of the porous carbon matrix 111 to be less than a specific value can reduce the diffusion of heat during the heating and atomization process to the non-heating area and the liquid, and also play a function of improving the energy utilization efficiency of heating and atomization. A porosity of the porous carbon matrix 111 is 40% to 80%. This enables the porous carbon matrix 111 to have good liquid absorbing and liquid guiding performance, while having high mechanical strength.

In some embodiments, the high conductive heating area 112 is located in a non-edge part of the porous carbon matrix 111. This can reduce the diffusion of heat during the heating and atomization process to the edge of the porous carbon, reducing energy loss and waste, and also reducing the possibility of the porous carbon atomization core 11 heating the housing and sealing gasket 12 of the electronic atomizer 10 to cause aging. It should be noted that the edge part is the part surrounded by the sealing gasket 12.

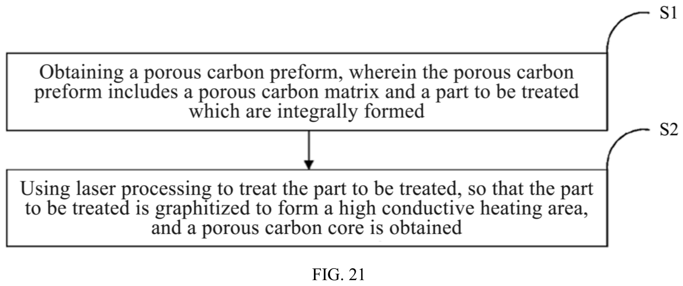

Based on a general inventive concept, the embodiment of the present disclosure further provides a method for preparing a porous carbon core, as shown in FIG. 21, the method includes:
S1. obtaining a porous carbon preform, wherein the porous carbon preform includes a porous carbon matrix and a part to be treated which are integrally formed;

In some embodiments, obtaining a porous carbon preform includes: mixing resin and pore-forming agent, then performing curing, pore forming and carbonizing to obtain the porous carbon preform.

Further, a residual carbon rate of the resin is not less than 40%. Using resins with the residual carbon rate of no less than 40% can enable the obtained porous carbon material to better maintain a skeleton structure of the matrix resin, enhance the mechanical strength of the porous carbon material, while reduce the possibility of generating large pores. Specifically, the resin can be selected from at least one of epoxy resin, phenolic resin, urea-formaldehyde resin, polyimide resin, benzoxazine resin, and polyarylacetylene resin. It should be noted that the above are only examples of resins that can be used to prepare the porous carbon matrix 111 and do not limit the present disclosure. In other embodiments, the resins can be selected from any resins with a residual carbon rate of no less than 40%.

Further, the pore-forming agent includes at least one of sodium chloride, starch, polyvinyl alcohol, polyvinyl butyral, polyvinylpyrrolidone, and paraffin. The way by which the pore-forming agent forms pores can include melting or dissolving, etc.

Further, a mass ratio of the resin to the pore-forming agent is 35:65 to 85:15. Controlling the mass ratio of the resin to the pore-forming agent to be 35:65 to 85:15 can enable the porous carbon matrix 111 to obtain a higher through-hole rate, thereby enabling the porous carbon matrix 111 to have better liquid absorbing and liquid guiding performance, as well as higher mechanical strength.

Further, a curing temperature is 80°C to 150°C. Selecting an appropriate curing temperature can enable the resin with the residual carbon rate of no less than 40% to undergo a curing reaction at an appropriate speed without generating bubbles or decomposition reactions, thereby maintaining the mechanical strength of the skeleton of the resin matrix. The carbonization temperature is 550°C to 750°C. Selecting an appropriate carbonization temperature can enable the porous carbon matrix 111 to be fully carbonized, while a range of specified requirements for electrical conductivity and heat conductivity can be reached, thereby reducing the occurrence of heat generation in non-atomization areas and heat diffusion from the atomization area to the non-atomization area, and improving energy utilization efficiency.

S2. treating the porous carbon preform by laser processing, so as to cause local graphitization of the porous carbon preform.

Treating the part to be treated by laser processing, so that the part to be treated absorbs laser energy, generates a local instantaneous high temperature, and undergoes local graphitization to form the high conductive heating area 112, thereby forming the high conductive heating area in the porous carbon preform. Due to the characteristics of monochromaticity and high directivity and concentrated energy of the laser, laser can be used for precise processing of porous carbon materials. At the same time, since the absorption rate of porous carbon materials to infrared lasers can reach more than 90%, the absorbed laser energy is mainly converted into internal energy. Therefore, using laser processing can achieve an effect of reaching an instantaneous high temperature in a processed area of the porous carbon preform while keeping the temperature in a non-processed area basically unchanged, so that the processed area of the porous carbon preform undergoes instant graphitization, forming a high electrical conductivity area, while the non-processed area maintains low electrical conductivity characteristics. At the same time, laser processing only changes the distribution of resistance in the porous carbon matrix 111, while maintaining the integration of the liquid absorbing part and the heating and atomization part, and maintaining the porous structure of the heating and atomization area. Therefore, it can ensure the patency of the liquid absorbing and guiding channels 16 and the uniform distribution of the heating temperature field. Additionally, since the porous carbon absorbs the high temperature generated by the laser, the porous carbon will be liquefied and gasified in small amounts, which will cause the processed area to form a groove in a direction towards an interior of the porous carbon preform, and at the same time, this groove does not run through the entire porous carbon core. The setting of controlling the groove not to run through the entire porous carbon core can reduce the direct contact between the heating and atomization area and the atomization substance 14 in the liquid storage chamber 15, reduce heat loss, and also reduce the possibility of the atomization substance 14 deteriorating due to heating.

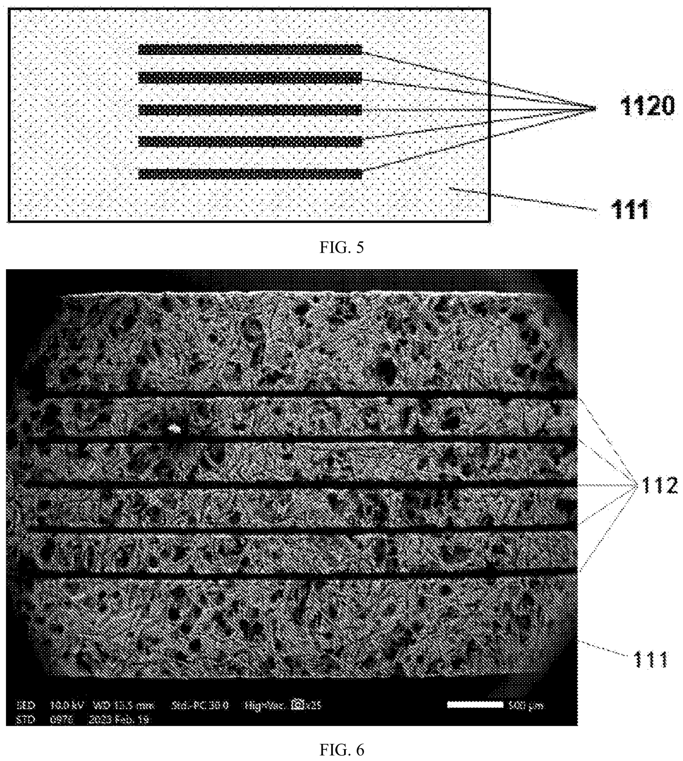

In some embodiments, the shape of a laser processing area 1120 can be any one or more of linear shape, net-like shape, or planar shape, as shown in FIGS. 5, 15, 17, and 19. This can make an area of the atomization area and the resistance of the atomization core 11 flexible and adjustable, meeting the usage requirements of electronic atomizers 10 in different situations.

In some embodiments, an absorption rate of the porous carbon preform to laser is greater than 80%. Controlling the absorption rate of laser by the porous carbon matrix 111 to be greater than 80% enables the porous carbon to absorb sufficient laser energy, thereby generating a local instantaneous high temperature, and achieving the purpose of adjusting and controlling the resistance of the heating area of the porous carbon. In actual production, production efficiency and energy efficiency can also be improved, waste is reduced and costs are saved. A power of the laser processing is 10-100 W, and a processing speed of the laser processing is 1-1000 mm/s. By using an appropriate laser power and processing speed, it is possible to ensure that the porous carbon absorbs sufficient laser energy, thereby generating the local instantaneous high temperature, achieving the purpose of adjusting and controlling the resistance of the heating area of the porous carbon, avoiding the occurrence of excessive energy absorption that damages the structure of the porous carbon and reduces the mechanical strength of the porous carbon.

The features and performance of the present disclosure are further described in detail below with reference to the embodiments.

### Embodiment 1

An atomization core 11 and an electronic atomizer 10 are prepared and obtained by the following method.

Mixing an phenolic resin oligomer solution and polyvinyl alcohol fibers in a mass ratio of 85:15 thoroughly and evenly, applying a pressure of 20000 N/m² at 80°C for curing and press-molding, placing the cured and molded mixture in water to allow the polyvinyl alcohol to fully dissolve, and separating and recovering it from the phenolic resin matrix to prepare and obtain a phenolic resin plate with communicated pore structures. Placing the prepared and obtained phenolic resin plate with communicated pore structures in an argon atmosphere, raising a temperature to 700°C and holding the temperature for 2 hours to prepare and obtain a porous carbon preform.

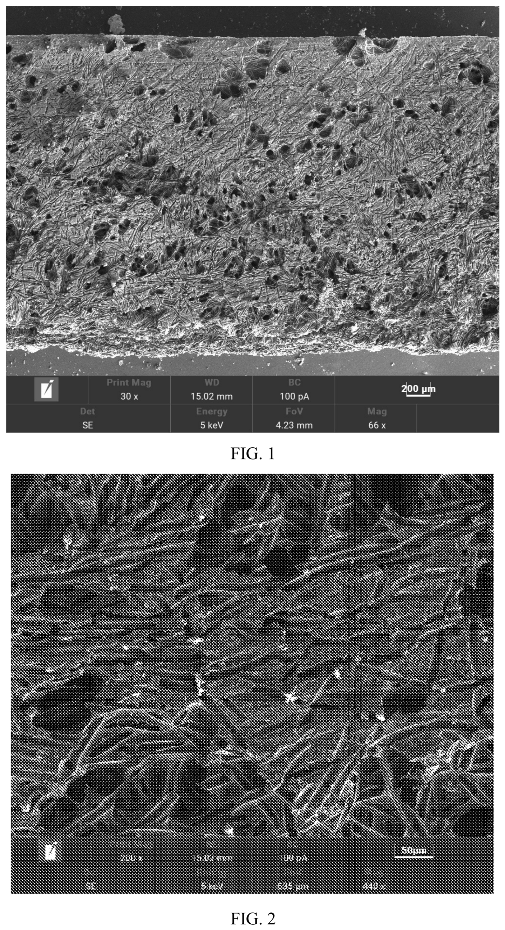

FIGS. 1 and 2 shown scanning electron microscope photos of the porous carbon preform prepared in this embodiment. It can be seen from the drawings that the porous carbon preform prepared in this embodiment has communicated pore structures, with an average pore diameter of approximately 10 µm, wherein the pore diameter distribution is relatively concentrated, and the structural uniformity is good.

The through-hole rate of the porous carbon preform is measured by a through-hole rate tester to be 62%. The heat conductivity of the porous carbon preform is measured to be 0.123 W/(m·K) by the laser heat conductivity method. The electrical conductivity of the porous carbon preform is measured by an electrical conductivity tester to be 5.8 S/m.

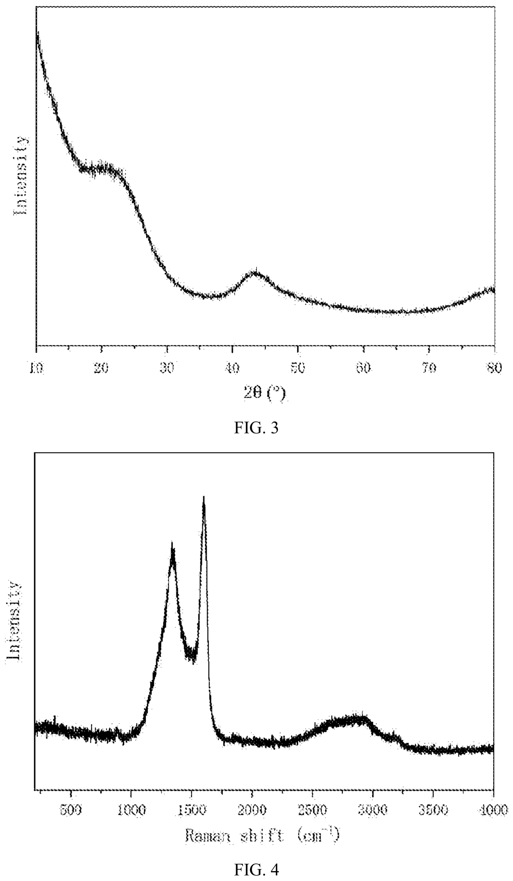

FIG. 3 shows an X-ray diffraction spectrum of the porous carbon preform prepared in this embodiment. In the spectrum, diffraction peaks appear near 2θ = 26° and at 2θ = 42°, corresponding to (002) and (100) crystal planes of graphite crystals, respectively, but the diffraction peak intensity is weak and the peak width is wide, indicating that a degree of graphitization of the porous carbon preform is low, mainly composed of amorphous carbon. FIG. 4 shows the Raman spectrum of the porous carbon preform prepared in this embodiment. In the spectrum, a D peak of carbon appears at a wavenumber of 1350 cm⁻¹, a G peak of carbon appears at the wavenumber of 1586 cm⁻¹, and a G' peak of carbon appears near the wavenumber of 2700 cm⁻¹, wherein the D peak is strong while the G' peak is very weak, indicating that the porous carbon preform has many crystal defects and is mainly composed of amorphous carbon.

The porous carbon preform is fixed on a laser processing platform. An absorption rate of laser by the porous carbon preform is measured to reach more than 99%. The laser power is adjusted to 18W, and the processing speed is 25mm/s. According to the laser processing structure diagram shown in FIG. 5, laser scribing is performed on the porous carbon preform to prepare a linear graphitized porous carbon to form a high conductive heating area 112 (also known as porous carbon with a high electrical conductivity). The electrical conductivity of the processed high conductive heating area 112 is measured by an electrical conductivity tester to be 816 S/m.

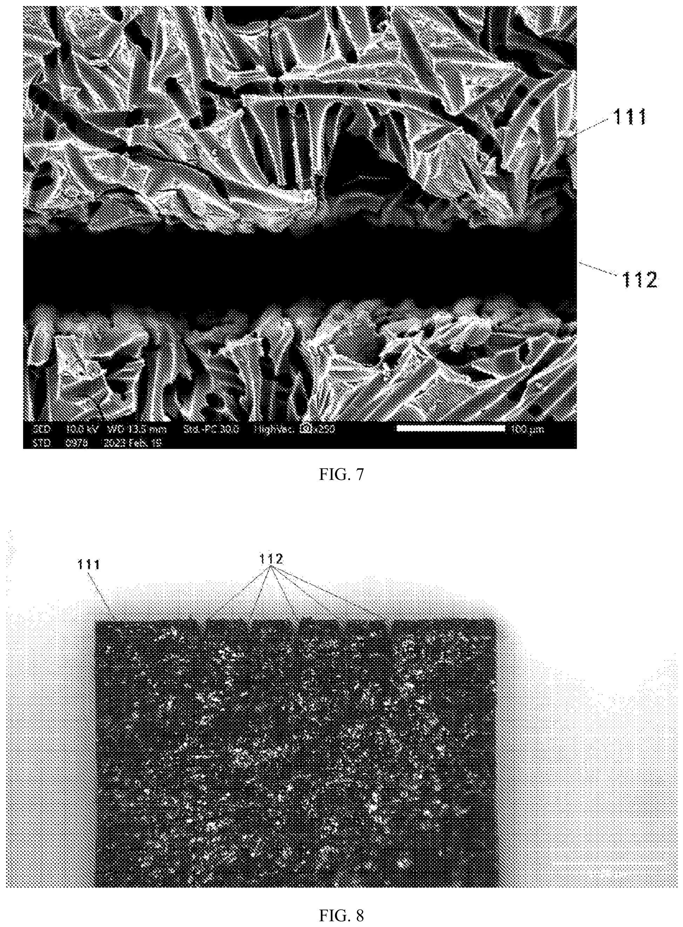

FIGS. 6, 7, and 8 show the scanning electron microscope photos of the high conductive heating area 112 prepared in this embodiment. It can be seen from the drawings that a microscopic morphology and pore structure of the high conductive heating area 112 are basically the same as those of the porous carbon with a low electrical conductivity. There is no structural damage, and the porous structure is well maintained, with more through holes and a relatively uniform distribution.

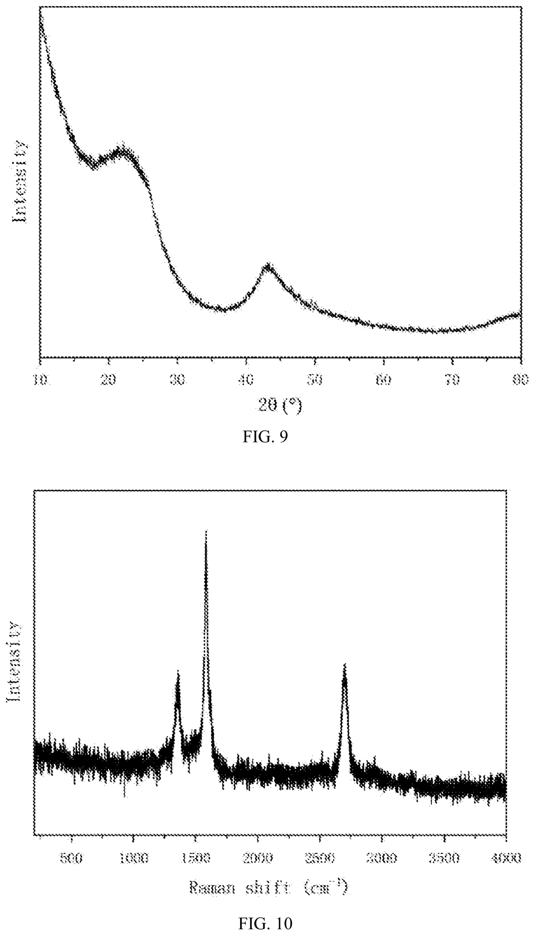

FIG. 9 shows the X-ray diffraction spectrum of the high conductive heating area 112 prepared in this embodiment. In the spectrum, diffraction peaks appear near 2θ = 26° and at 2θ = 42°, corresponding to the (002) and (100) crystal planes of graphite crystals, respectively. The diffraction peak intensity of the high conductive heating area shows an increasing trend compared to the porous carbon preform with low electrical conductivity, indicating that the high conductive heating area has undergone local graphitization and the degree of graphitization has increased. However, due to the small proportion of graphitized carbon, the overall diffraction intensity has not increased significantly. FIG. 10 shows Raman spectrum of the high conductive heating area 112 prepared in this embodiment. In the spectrum, the D peak of carbon appears at the wavenumber of 1350 cm⁻¹, the G peak of carbon appears at the wavenumber of 1586 cm⁻¹, and the G' peak of carbon appears near the wavenumber of 2700 cm⁻¹. The G peak and G' peak of the high conductive heating area are significantly enhanced compared to the porous carbon preform with low electrical conductivity, while the D peak of the high conductive heating area is significantly weakened compared to the porous carbon preform with low electrical conductivity, indicating that the crystallinity of the high conductive heating area 112 is significantly improved, and local graphitization occurs.

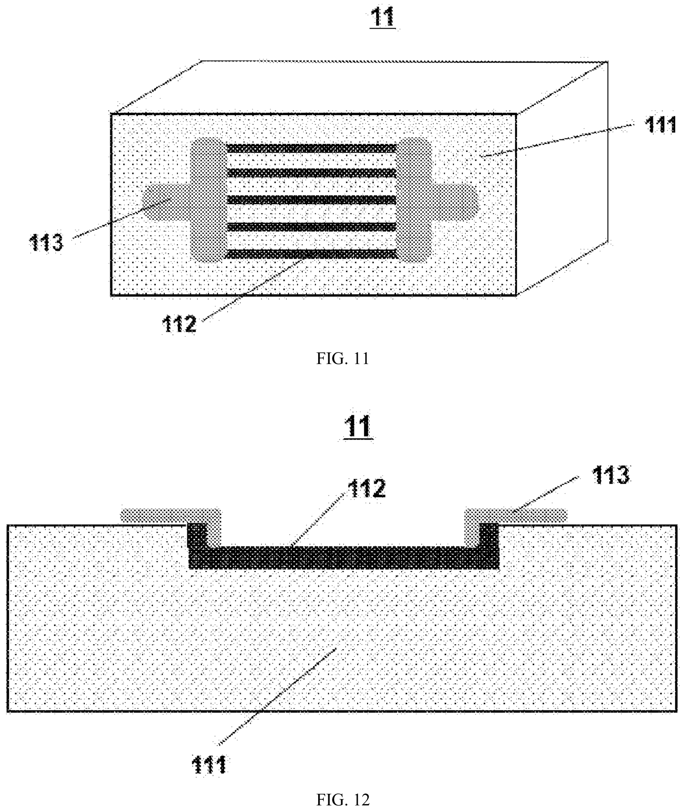

According to the structural diagram of the porous carbon atomization core 11 shown in FIG. 11, conductive silver paste is used to print electrodes 113 on the surface of the porous carbon matrix 111 and at both ends of the linear high conductive heating area 112. The spacing between the two electrodes 113 is 2.5 mm. Sintering is performed to form electrical connections between the linear high conductive heating area 112 and the electrodes 113. Then, it is cut into 9 mm × 3.5 mm blocks to obtain the atomization core 11. FIG. 12 shows schematic diagram of the transverse section of the atomization core 11 prepared in this embodiment, and FIG. 13 shows the schematic diagram of the vertical section of the atomization core 11 prepared in this embodiment. The resistance value of the atomization core 11 is measured by a resistance tester to be 1.8 Ω.

According to the structural schematic diagram of the electronic atomizer 10 shown in FIG. 14, the obtained atomization core 11 is sleeved with a sealing gasket 12, fixed in the housing 18 of the electronic atomizer 10, and the electrodes 113 are electrically connected to the pin guide column 13. The electronic atomizer 10 is assembled, and a power of 6.5 W is applied for an atomization test. The temperature of the atomization area of the electronic atomizer 10 is measured to be 281°C, and the atomization amount is 13.7 mg/puff.

### Embodiment 2

An atomization core 11 and an electronic atomizer 10 are prepared and obtained by the following method.

Mixing the epoxy resin prepolymer solution and polyvinylpyrrolidone at a mass ratio of 35:65 thoroughly and evenly, applying a pressure of 40,000 N/m² at a temperature of 120°C for curing and press-molding, placing the cured and molded mixture in water to allow the polyvinylpyrrolidone to fully dissolve, and separating and recovering it from the epoxy resin matrix to prepare and obtain an epoxy resin plate with communicated pore structures. Placing the prepared and obtained epoxy resin plate with communicated pore structures in an argon atmosphere, raising the temperature to 600°C and holding the temperature for 2 hours to prepare and obtain a porous carbon preform.

The through-hole rate of the porous carbon preform is measured by a through-hole rate tester to be 67%. The heat conductivity of the porous carbon preform is measured to be 0.099 W/(m·K) by the laser heat conductivity method. The electrical conductivity of the porous carbon preform is measured to be 2.4 mS/m by the electrical conductivity tester.

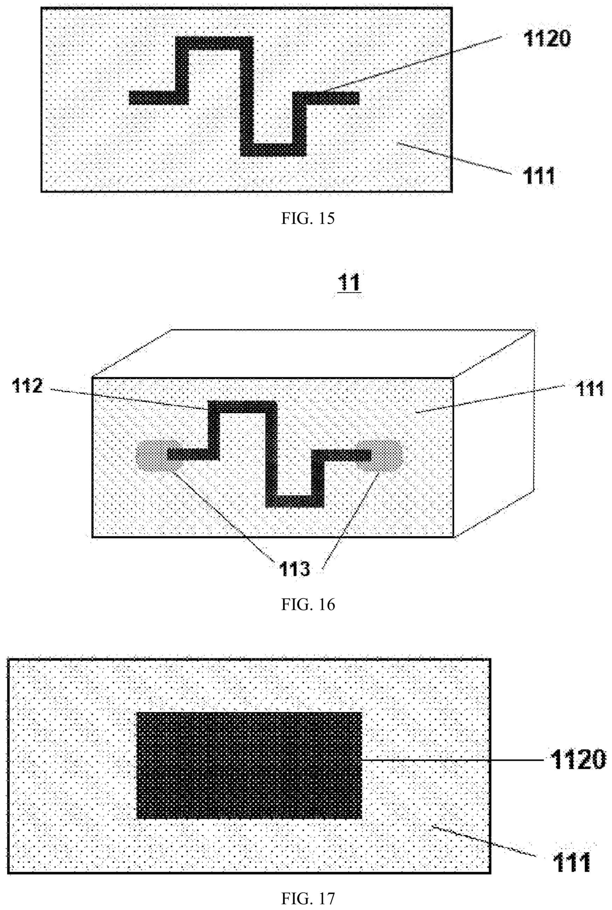

The porous carbon preform is fixed on the laser processing platform. An absorption rate of laser by the porous carbon preform is measured to be 97%. The laser power is adjusted to 20W, and the processing speed is 25mm/s. According to the laser processing structure schematic diagram shown in FIG. 15, laser scribing is performed on the porous carbon preform to prepare a linear high conductive heating area 112, and the electrical conductivity of the processed high conductive heating area 112 is measured by the electrical conductivity tester to be 1220 S/m.

According to the structural schematic diagram of the atomization core 11 shown in FIG. 16, conductive gold paste is used to print electrodes 113 on the surface of the porous carbon matrix 111 and at both ends of the linear high conductive heating area 112. The spacing between the two electrodes 113 is 3.0mm. Sintering is performed to form electrical connections between the linear high conductive heating area 112 and the electrodes 113. Then, it is cut into 9mm×3.5mm blocks to obtain the atomization core 11. The resistance value of the atomization core 11 is measured to be 2.0Ω by the resistance tester.

According to the structural schematic diagram of the electronic atomizer 10 shown in FIG. 14, the obtained atomization core 11 is sleeved with the sealing gasket 12, fixed in the housing 18 of the electronic atomizer 10, and the electrodes 113 are electrically connected to the pin guide column 13. The electronic atomizer 10 is assembled, and a power of 6.5 W is applied for an atomization test. The temperature of the atomization area of the electronic atomizer 10 is measured to be 286°C, and the atomization amount is 12.9 mg/puff.

### Embodiment 3

An atomization core 11 and an electronic atomizer 10 are prepared and obtained by the following method.

Mixing the polyimide resin monomer solution and sodium chloride at a mass ratio of 60:40 thoroughly and evenly, applying a pressure of 10,000 N/m² at a temperature of 150°C for curing and press-molding, placing the cured and molded mixture in water to allow the sodium chloride to fully dissolve, and separating and recovering it from the polyimide resin matrix to prepare and obtain a polyimide resin plate with communicated pore structures. Placing the prepared and obtained polyimide resin plate with communicated pore structures in a nitrogen atmosphere, raising the temperature to 650°C and holding the temperature for 2 hours to prepare and obtain a porous carbon preform.

The through-hole rate of the porous carbon preform is measured by a through-hole rate tester to be 56%. The heat conductivity of the porous carbon preform is measured to be 0.114 W/(m·K) by the laser heat conductivity method. The electrical conductivity of the porous carbon preform is measured to be 10.5 mS/m by the electrical conductivity tester.

The porous carbon preform is fixed on the laser processing platform. An absorption rate of laser by the porous carbon preform is measured to be 94%. The laser power is adjusted to 16W, and the processing speed is 50mm/s. According to the laser processing structure schematic diagram shown in FIG. 17, laser etching is performed on the porous carbon preform to prepare a planar-shaped high conductive heating area 112, and the electrical conductivity of the processed high conductive heating area 112 is measured by the electrical conductivity tester to be 680 S/m.

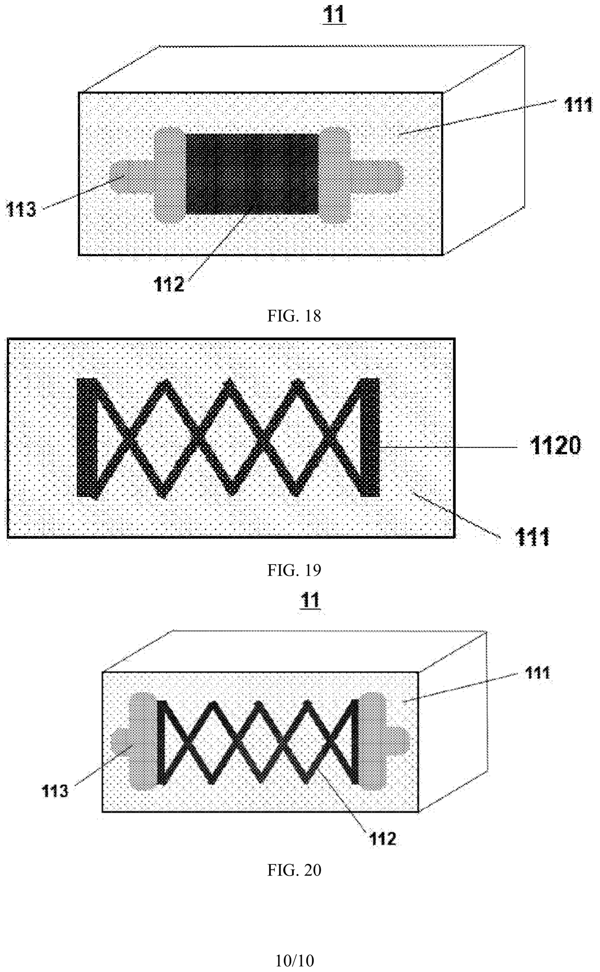

According to the structural schematic diagram of the atomization core 11 shown in FIG. 18, conductive nickel paste is used to print electrodes 113 on the surface of the porous carbon matrix 111 and at both ends of the planar-shaped high conductive heating area 112. The spacing between the two electrodes 113 is 2.0mm. Sintering is performed to form electrical connections between the planar-shaped high conductive heating area 112 and the electrodes 113. Then, it is cut into cylinders with a diameter of 6mm to obtain the atomization core 11.

The resistance value of the atomization core 11 is measured by the resistance tester to be 1.2 Ω.

According to the structural schematic diagram of the electronic atomizer 10 shown in FIG. 14, the obtained atomization core 11 is sleeved with a sealing gasket 12, fixed in the housing 18 of the electronic atomizer 10, and the electrodes 113 are electrically connected to the pin guide column 13. The electronic atomizer 10 is assembled, and a power of 6.5W is applied for an atomization test. The temperature of the atomization area of the electronic atomizer 10 is measured to be 273°C, and the atomization volume is 13.0 mg/puff.

### Embodiment 4

An atomization core 11 and an electronic atomizer 10 are prepared and obtained by the following method.

Mixing urea-formaldehyde resin oligomer solution and polyvinyl butyral fiber in a mass ratio of 70:30 thoroughly and evenly, applying a pressure of 20000 N/m² at 100°C for curing and press-molding, placing the cured and molded mixture in an ethanol solvent to allow the polyvinyl butyral fully dissolve, separating and recovering it from the urea-formaldehyde resin matrix to prepare and obtain a urea-formaldehyde resin plate with communicated pore structures. Placing the prepared and obtained urea-formaldehyde resin plate with communicated pore structures in a nitrogen atmosphere, raising the temperature to 750°C, and holding the temperature for 2 hours to prepare and obtain a porous carbon preform.

The through-hole rate of the porous carbon preform is measured by a through-hole rate tester to be 66%. The heat conductivity of the porous carbon preform is measured to be 0.161 W/(m·K) by the laser heat conductivity method. The electrical conductivity of the porous carbon preform is measured to be 18.0 S/m by the electrical conductivity tester.

The porous carbon preform is fixed on the laser processing platform, and the absorption rate of the laser by the porous carbon preform is measured to be 98%. The laser power is adjusted to 18W, the processing speed is 25mm/s. According to the laser processing structure diagram shown in FIG. 19, laser scribing is performed on the porous carbon preform to prepare a net-like high conductive heating area 112. The electrical conductivity of the processed high conductive heating area 112 is measured by the electrical conductivity tester to be 890S/m.

According to the structural diagram of multiple atomization cores 11 shown in FIG. 20, conductive platinum paste is used to print electrodes 113 on the surface of the porous carbon matrix 111 and at both ends of the net-like high conductive heating area 112. The spacing between the two electrodes 113 is 2.5mm. Sintering is performed to form electrical connections between the net-like high conductive heating area 112 and the electrodes 113. Then, it is cut into cylinders with a diameter of 6mm to obtain the atomization core 11.

The resistance value of the atomization core 11 is measured by the resistance tester to be 1.4Ω.

According to the structural schematic diagram of the electronic atomizer 10 shown in FIG. 14, the obtained atomization core 11 is sleeved with a sealing gasket 12, fixed in the housing 18 of the electronic atomizer 10, and the electrodes 113 are electrically connected to the pin guide column 13. The electronic atomizer 10 is assembled, and a power of 6.5W is applied for an atomization test. The temperature of the atomization area of the electronic atomizer 10 is measured to be 279°C, and the atomization volume is 13.5 mg/puff.

### Comparative example 1

An atomization core 11 and an electronic atomizer 10 are prepared and obtained by the following method.

Mixing the phenolic resin oligomer solution and polyvinyl alcohol fibers in a mass ratio of 85:15 thoroughly and evenly, applying a pressure of 20,000 N/m² at a temperature of 80°C for curing and press-molding, placing the cured and molded mixture in water to allow polyvinyl alcohol to fully dissolve, and separating and recovering it from the phenolic resin matrix to prepare and obtain a phenolic resin plate with communicated pore structures. Placing the prepared and obtained phenolic resin plate with communicated pore structures in an argon atmosphere, raising the temperature to 800°C and holding the temperature for 2 hours to prepare and obtain a porous carbon preform.

The through-hole rate of the porous carbon preform is measured using a through-hole rate tester to be 63%. The heat conductivity of the porous carbon preform is measured to be 0.470 W/(m·K) by the laser heat conductivity method. The electrical conductivity of the porous carbon preform is measured by the electrical conductivity tester to be 450 S/m.

Without laser processing, conductive silver paste is directly used to print electrodes 113 on the surface of the porous carbon preform. The spacing between the two electrodes 113 is 1.5 mm. Sintering is performed to form electrical connections between the porous carbon and the electrodes 113. Then it is cut into 9mm×3.5mm blocks to obtain the atomization core 11.

The resistance value of the atomization core 11 is measured by a resistance tester to be 1.8 Ω.

According to the structural schematic diagram of the electronic atomizer 10 shown in FIG. 14, the obtained atomization core 11 is sleeved with a sealing gasket 12, fixed in the housing 18 of the electronic atomizer 10, and the electrodes 113 are electrically connected to the pin guide column 13. The electronic atomizer 10 is assembled. A power of 6.5 W is applied for an atomization test, and the temperature of the atomization area of the electronic atomizer 10 is measured to be 269°C, with an atomization amount of 9.6 mg/puff; and a power of 7.5 W is supplied for an atomization test, and the temperature of the atomization area is measured to be 272°C, with an atomization volume of 10.8 mg/puff.

### Comparative example 2

An atomization core 11 is prepared and obtained by the following method: mixing alumina ceramic powder, glass powder, and starch in a mass ratio of 50:10:40 thoroughly and evenly. An average particle size of alumina ceramic is 5 µm, the average particle size of glass powder is 1 µm, and the average particle size of starch is 15 µm. Placing the mixed powder in a mold, embedding a heating net of a stainless steel on the surface of the mixed powder, applying a pressure of 50,000 N/m² to press and mold, placing the molded mixture in an air atmosphere, raising the temperature to 500°C, holding the temperature for 1 hour, and then placing the molded mixture in a nitrogen atmosphere, raising the temperature to 1000°C and sintering for 3 hours to prepare and obtain the atomization core 11.

The through-hole rate of the atomization core 11 is measured by a through-hole rate tester to be 48%. The resistance value of the atomization core 11 is measured by a resistance tester to be 1.1 Ω.

According to the structural schematic diagram of the electronic atomizer 10 shown in FIG. 14, the obtained atomization core 11 is sleeved with a sealing gasket 12, fixed in the housing 18 of the electronic atomizer 10 and the electrodes 113 are electrically connected to the pin guide column 13. The electronic atomizer 10 is assembled. Power of 6.5 W is supplied for an atomization test, and the temperature of the atomization area of the electronic atomizer 10 is measured to be 277°C, with an atomization volume of 10.2 mg/puff; and power of 7.5 W is supplied for an atomization test, and the temperature of the atomization area of the electronic atomizer 10 is measured to be 286°C, with an atomization volume of 11.8 mg/puff.

### Comparative example 3

An atomization core 11 is prepared and obtained by the following method.

Mixing the phenolic resin oligomer solution and polyvinyl alcohol fibers in a mass ratio of 85:15 thoroughly and evenly, applying a pressure of 20,000 N/m² at a temperature of 80°C for curing and press-molding, embedding a heating net of a stainless steel on its surface during the curing and press-molding process, placing the cured and molded mixture in water to allow polyvinyl alcohol to fully dissolve, and separating and recovering it from the phenolic resin matrix to prepare and obtain a phenolic resin plate with communicated pore structures. Placing the prepared and obtained phenolic resin plate with communicated pore structures in an argon atmosphere, raising the temperature to 700°C and holding the temperature for 2 hours to prepare and obtain the atomization core 11.

The through-hole rate of the atomization core 11 is measured by a through-hole rate tester to be 61%. The heat conductivity of the atomization core 11 is measured to be 0.125 W/(m·K) by the laser heat conductivity method.

Conductive silver paste is used to print electrodes on the surface of the porous carbon preform and at the end of the heating net of the stainless steel. The spacing between the two electrodes is 5.0 mm. Sintering is performed to form electrical connections between the porous carbon and the electrodes. Then, it is cut into 9mm × 3.5mm blocks to obtain the atomization core.

The resistance value of the atomization core is measured to be 1.2 Ω by a resistance tester.

According to the structural schematic diagram of the electronic atomizer 10 shown in FIG. 14, the obtained atomization core 11 is sleeved with a sealing gasket 12, fixed in the housing 18 of the electronic atomizer 10, and the electrode 113 is electrically connected to the pin guide column 13. The electronic atomizer 10 is assembled. A power of 6.5W is supplied for an atomization test, and the temperature of the atomization area of the electronic atomizer 10 is measured to be 274°C, with an atomization volume of 8.1mg/puff; and a 7.5W power is supplied for an atomization test, and the temperature of the atomization area of the electronic atomizer 10 is measured to be 282°C, with an atomization volume of 9.9mg/puff.

The atomization tests are conducted on the electronic atomizers 10 provided in Embodiment 1 to Embodiment 4 and in Comparative example 1 to Comparative example 2. The results are shown in the following table.

| | Power of 6.5W | | Power of 7.5W | |
|---|---|---|---|---|
| | atomization area temperature °C | atomization volume mg/puff | atomization area temperature °C | atomization volume mg/puff |
| Embodiment 1 | 281 | 13.7 | / | / |
| Embodiment 2 | 286 | 12.9 | / | / |
| Embodiment 3 | 273 | 13.0 | / | / |
| Embodiment 4 | 279 | 13.5 | / | / |
| Comparative example 1 | 269 | 9.6 | 272 | 10.8 |
| Comparative example 2 | 277 | 10.2 | 286 | 11.8 |
| Comparative example 3 | 274 | 8.1 | 282 | 9.9 |

As can be seen from the above table, the electronic atomizer 10 prepared and obtained by the method provided by the embodiments of the present disclosure can achieve a higher atomization area temperature and better atomization volume under a lower power supply.

Those described above are merely specific embodiments of the present disclosure and are not intended to limit the present disclosure. For those skilled in the art, the present disclosure can have various modifications and changes. All modifications, equivalents, and improvements made within the spirit and principles of the present disclosure shall be included within the protection scope of the present disclosure.

### INDUSTRIAL PRACTICABILITY

The present disclosure provides a porous carbon core and a preparation method thereof, an atomization core, and an electronic atomizer. The method includes: obtaining a porous carbon preform, wherein the porous carbon preform includes a porous carbon matrix and a part to be treated which are integrally formed; treating the part to be treated by laser processing to graphitize the part to be treated to form a high conductive heating area, thereby obtaining a porous carbon core, wherein an electrical conductivity of the high conductive heating area is greater than that of the porous carbon matrix; treating the part to be treated of the porous carbon preform by the laser processing, so that the part to be treated absorbs the laser energy, generates local instantaneous high temperature, and undergoes local graphitization, thereby forming the high conductive heating area in the porous carbon preform, wherein the high conductive heating area can be used as a atomization part, wherein the high conductive heating area can be used as an atomization part, so that an electric heating basically occurs in the atomization part with a high electrical conductivity, and the porous carbon matrix with a low electrical conductivity is a non-atomization part, which mainly plays the function of absorbing and guiding liquid, reducing the energy consumption of the porous carbon atomization core.

Furthermore, it is understood that the porous carbon core and preparation method thereof, atomization core, and electronic atomizer of the present disclosure can be reproduced and can be used in various industrial applications. For example, the porous carbon core and preparation method thereof, atomization core, and electronic atomizer of the present disclosure can be used in technical field of the material of atomization devices.

## Claims

1. A method for preparing a porous carbon core, the method comprising:
obtaining a porous carbon preform, wherein the porous carbon preform comprises a porous carbon matrix and a part to be treated which are integrally formed; and
treating the part to be treated by laser processing to graphitize the part to be treated to form a high conductive heating area, thereby obtaining the porous carbon core;
wherein an electrical conductivity of the high conductive heating area is greater than that of the porous carbon matrix.

2. The method for preparing a porous carbon core according to claim 1, wherein a difference between the electrical conductivity of the porous carbon matrix and the electrical conductivity of the high conductive heating area is not less than 400 S/m.

3. The method for preparing a porous carbon core according to claim 2, wherein the electrical conductivity of the porous carbon matrix is less than 100 S/m and the electrical conductivity of the high conductive heating area is greater than 500 S/m.

4. The method for preparing a porous carbon core according to any one of claims 1 to 3, wherein a heat conductivity of the porous carbon preform is less than 2 W/(m·K).

5. The method for preparing a porous carbon core according to any one of claims 1 to 4, wherein an absorption rate of the porous carbon to laser is greater than 80%.

6. The method for preparing a porous carbon core according to any one of claims 1 to 5, wherein a laser power of the laser processing is 10-100 W, and a processing speed of the laser processing is 1-1000 mm/s.

7. The method for preparing a porous carbon core according to any one of claims 1 to 6, wherein the obtaining a porous carbon preform comprises: mixing resin and pore-forming agent, then performing curing, pore forming and carbonizing to obtain the porous carbon preform.

8. The method for preparing a porous carbon core according to claim 7, wherein a porosity of the porous carbon preform is 40% to 80%, a residual carbon rate of the resin is greater than 40%, and a mass ratio of the resin to the pore-forming agent is 35:65 to 85:15.

9. The method for preparing a porous carbon core according to claim 7 or 8, wherein the resin comprises at least one of epoxy resin, phenolic resin, urea-formaldehyde resin, polyimide resin, benzodiazepine resin and polyarylacetylene resin; and the pore-forming agent comprises at least one of sodium chloride, starch, polyvinyl alcohol, polyvinyl butyral, polyvinylpyrrolidone and paraffin.

10. The method for preparing a porous carbon core according to any one of claims 7 to 9, wherein a curing temperature is 80°C to 150°C and a carbonization temperature is 550°C to 750°C.

11. A porous carbon core, the porous carbon core comprising: a porous carbon matrix and a high conductive heating area which are integrally formed, wherein an electrical conductivity of the high conductive heating area is greater than that of the porous carbon matrix.

12. The porous carbon core according to claim 11, wherein the porous carbon matrix is provided with a groove, and the high conductive heating area is located in the groove.

13. The porous carbon core according to claim 12, wherein a depth-to-width ratio of the groove is less than 10.

14. The porous carbon core according to any one of claims 11 to 13, wherein the high conductive heating area is located in a non-edge part of the porous carbon matrix.

15. A atomization core, the atomization core comprising a porous carbon core prepared by the method for preparing the porous carbon core according to claims 1 to 10 or the porous carbon core according to claims 11 to 14.

16. The atomization core according to claim 15, wherein the atomization core further comprises an electrode, and the electrode is directly electrically connected to the high conductive heating area.

17. An electronic atomizer, the electronic atomizer comprising the atomization core according to claim 15 or 16.

18. The electronic atomizer according to claim 17, wherein the atomization core is provided with a liquid absorbing surface and an atomization surface, the liquid absorbing surface faces a liquid guiding channel of the electronic atomizer, the atomization surface and the liquid absorbing surface are arranged opposite to each other, and the atomization surface is provided with the high conductive heating area.
